# EUROPÄISCHE PATENTSCHRIFT

(11) **EP 2 408 975 B1**
(45) Veröffentlichungstag und Bekanntmachung des Hinweises auf die Patenterteilung: **15.10.2014**
(21) Anmeldenummer: 10734899.7
(22) Anmeldetag: 16.03.2010
(51) Int. Cl.: F16B 7/18

(54) **VORRICHTUNG ZUM BEFESTIGEN VON BALKEN UND ANDEREN BAUTEILEN**
DEVICE FOR ATTACHING BEAMS AND OTHER COMPONENTS
DISPOSITIF DE FIXATION DE POUTRES ET D'AUTRES COMPOSANTS

(30) Priorität: 16.03.2009 DE 202009003633 U
(43) Veröffentlichungstag der Anmeldung: 25.01.2012
(73) Patentinhaber: Schletter GmbH, 83527 Kirchdorf (DE)
(72) Erfinder: BUB, Fabian, 80469 München (DE)
(86) Internationale Anmeldenummer: PCT/DE2010/000290
(87) Internationale Veröffentlichungsnummer: WO 2010/105606

(56) Entgegenhaltungen:
- GB-A- 2 190 456

## Beschreibung

Die Erfindung betrifft eine Vorrichtung mit zwei Wangen, zwischen denen ein Balken oder ein anderes Bauteil befestigt werden kann. Beispiele für derartige Vorrichtungen sind sogenannte Stützenschuhe und Gabelköpfe, wie sie im Bauwesen und in der Gestelltechnik oft Anwendung finden. Hierbei kann es zweckmäßig sein, wenn eine solche Vorrichtung oder das Bauteil darin höhenverstellbar ist.

Aus DE 88 01 513 U1 ist ein Stützenschuh zur Aufnahme und Halterung von Balkenenden bekannt. Die U-förmige Aufnahme des Stützenschuhs ist höhenverstellbar und weist zwei Wangen auf, zwischen denen das Ende einer Stütze oder eines Balkens befestigbar ist.

Aus DE 20 2008 005 020 U1 ist ein Montagesystem für Photovoltaik-Anlagen bekannt, das einen Gabelkopf zur verstellbaren Befestigung eines Balkens auf einer Stütze umfasst. Der Balken ist zwischen zwei Wangen des Gabelkopfs aufgenommen und mittels eines verschraubbaren Gelenkbolzens höhen- und neigungsverstellbar befestigt. Der Gelenkbolzen ist dazu in vertikalen Achsschlitzen in den Wangen geführt und zudem in zwei Beilagkörpern gelagert, welche an die Außenseiten der Wangen mittels des Gelenkbolzens gespannt sind. Um zu verhindern, dass der Gelenkbolzen in den Achsschlitzen unabsichtlich verrutscht, sind sowohl an den Außenseiten der Wangen als auch an den gegenüberliegenden Seiten der Beilagkörper waagerecht verlaufende Kerbverzahnungen vorgesehen, die in der gewünschten Höhe beim Verschrauben des Gelenkbolzens ineinander eingreifen. Die Kerbverzahnung ist dabei mit dem im Strangpressverfahren hergestellten Gabelkopf mitextrudiert.

GB 2190 456 A offenbart eine Vorrichtung zum Befestigen von Bauteilen gemäß dem Oberbegriff des Anspruchs 1.

Es ist Aufgabe, eine Vorrichtung der vorgenannten Art zu schaffen, die verbesserte Eigenschaften hinsichtlich Festigkeit und Montage bietet.

Die Lösung der Aufgabe erfolgt mit der in Anspruch 1 angegebenen Vorrichtung zum Befestigen von Bauteilen. Demgemäß umfasst die Vorrichtung ein fest anordenbares Strangpressteil mit zwei sich gegenüberstehenden Wangen, zwischen denen ein Bauteil, insbesondere ein Balken, mittels eines Bolzens befestigbar ist, wobei der Bolzen in zwei Schlitzen in den Wangen höhenveränderlich geführt ist und in zwei vorzugsweise stranggepressten Lagerstücken lagert, welche an den Außenseiten der Wangen angeordnet sind. Nicht nur das Strangpressteil, sondern auch die beiden Lagerstücke können in einem Strangpressverfahren jeweils von einem entsprechenden Profil abgelängt und weiter bearbeitet sein. Die Wangen des Strangpressteils sind hierbei bevorzugt parallel beabstandet und stehen bei fest angeordnetem Strangpressteil vorzugsweise vertikal. Die Schlitze in den Wangen sind dann zweckmäßigerweise ebenfalls vertikal vorgesehen, sodass der Bolzen darin direkt nach oben und unten verschieblich ist. Zudem sind die Schlitze bevorzugt als Langlöcher oder nach oben offene Schlitze ausgeführt.

Zur Lagesicherung der Lagerstücke ist des Weiteren vorgesehen, dass jede Wange an ihrer Außenseite eine Rastverzahnung mit einer Vielzahl quer zu den Schlitzen gerichteter Rastzähne und jedes Lagerstück an seiner der jeweiligen Wange gegenüberliegenden Seite ebenso eine Rastverzahnung mit mindestens einem Rastzahn aufweist, wobei die Rastverzahnungen der Lagerstücke in einer von mehreren Raststellungen unterschiedlicher Höhe in die Rastverzahnungen der Wangen eingreifen. Die Rastverzahnungen sind bevorzugt mit dem Strangpressteil bzw. mit den Lagerstücken mitextrudiert, sodass deren Rastzähne als gerade Stränge ausgeführt sind. Andere Herstellungsverfahren für die Rastverzahnungen und deren Träger sind ebenfalls denkbar, insbesondere Fräsen oder Erodieren. Für eine zweckmäßige Höhenverstellbarkeit verlaufen die Rastzähne bei fest angeordnetem Strangpressteil vorzugsweise waagerecht und folglich senkrecht zu den Schlitzen. Hierbei können die Rastzähne wie bei Verzahnungen üblich innerhalb einer Rastverzahnung identisch und gleich beabstandet ausgeführt sein. Der der Regelabstand der Rastzähne an den Wangen entspricht dabei vorzugsweise genau einer Verstellstufe.

Eine wesentliche Neuerung der erfindungsgemäßen Vorrichtung besteht darin, dass die Lagerstücke mittels ihrer Rastverzahnung in die Rastverzahnung der Wangen eingehängt sind, wozu die oberen Flanken der Rastzähne der Rastverzahnungen der Wangen und die unteren Flanken der Rastzähne der Rastverzahnungen der Lagerstücke hinterschnitten ausgeführt sind. In einer senkrechten Ansicht auf die Front der jeweiligen Rastverzahnung sind diese Flanken oder Teile davon deshalb nicht einsehbar, da sie vom Kopf des jeweiligen Rastzahns oder von einem Vorsprung verdeckt werden, der sich zum Kopf hin durch die Form der Hinterschneidung ergibt. Zum Einhängen können die durch die Hinterschneidungen der unteren Flanken gebildeten Vorsprünge in die Hinterschneidungen der oberen Flanken eingreifen bzw. wiederum deren Vorsprünge hintergreifen. Dabei ist es möglich, dass die Hinterschneidung und der Vorsprung einer Flanke fließend ineinander übergehen und sehr flach ausgeführt sind. Wesentlich ist, dass die Vorsprünge an den unteren Flanken im weiten Sinne als Haken wirken, welche in die Hinterschneidung der oberen Flanken durch Einhängen eingreifen, wodurch eine Hakenverbindung gebildet wird, die ohne weiteres Zutun allein durch die Gewichtskraft der Lagerstücke hält. Unabhängig davon können die Lagerstücke zusätzlich axial gesichert oder gegen die Wangen gespannt sein.

Die Erfindung ist mit einer Reihe von Vorteilen verbunden. So ist im Gegensatz zu der aus dem Stand der Technik bekannten Kerbverzahnung selbst bei ungespannten oder stark belasteten Lagerstücken ein Abrutschen derselben an den Wangen sicher ausgeschlossen. Ein Lösen der Hakenverbindung ist ohne gleichzeitiges Anheben des Bauteils um einen geringen Betrag nicht mehr möglich. Außerdem sind die Aufstandsflächen der Rastverzahnungen bevorzugt größer als diejenigen des Bolzens, sodass die übertragbaren Kräfte nur noch vom Materialquerschnitt des Bolzens abhängig sind. Ein weiterer wesentlicher Vorteil besteht darin, dass die Lagerstücke während des Montagevorgangs in jeder Raststellung von selbst an den Wangen hängen bleiben. Selbst ein leichtes Anstoßen an das Strangpressteil führt nicht dazu, dass die Lagerstücke sich von den Wangen lösen. Zur schrittweisen Annäherung an die gewünschte Raststellung müssen die Lagerstücke zudem nicht mehr wie im Stand der Technik an die Wangen vorgespannt werden. Vielmehr genügt es nun, diese durch wiederholtes Aus- und Einhängen in einer anderen Raststellung zu positionieren. Sämtliche Vorteile wirken sich besonders günstig aus, wenn mehrere der erfindungsgemäßen Vorrichtungen für ein System von Bauteilen verwendet werden, beispielsweise für mehrere Stützen eines Gestells. So können zunächst alle diese Bauteile einzeln der Höhen nach eingestellt und anschließend zusammen endmontiert werden.

In einer zweckmäßigen Ausführungsform sind die Lagerstücke und der Bolzen gegeneinander axial gesichert, beispielsweise mittels Splinten, sodass sich weder der Bolzen noch die Lagerstücke vom Strangpressteil lösen können. Vorzugsweise können die Lagerstücke jedoch nicht nur axial gesichert, sondern mit am Bolzen vorgesehenen Spannmitteln zudem gegen die Wangen gespannt werden. So kann der Bolzen beispielsweise ein Gewindebolzen sein, auf dem Muttern angeordnet sind, welche die Lagerstücke gegen die Wangen spannen. Eine einfache Kopfschraube mit einer Mutter ist zu diesem Zweck allerdings besonders geeignet.

In einer bevorzugten Ausführungsform weist das Strangpressteil einen mitextrudierten Montagegrund auf, mit dem es auf einer Montagestelle, insbesondere einem horizontalen Fundament oder dem Kopf einer Stütze, ortsfest angeordnet werden kann. Für eine zweckmäßige Höhenverstellung des Bolzens sind die Schlitze in den Wangen dabei bevorzugt senkrecht zu dem Montagegrund vorgesehen. Außerdem können die Wangen mit dem Montagegrund oder einem Teil davon eine einfache U-Profilform bilden. Sind sowohl die Rastzähne an den Wangen als auch der Montagegrund mit dem Strangpressteil mitextrudiert, verlaufen die Rastzähne herstellungsbedingt parallel zum Montagegrund.

In einer bevorzugten Ausführungsform die Rastverzahnungen betreffend sind die Form der oberen Flanken der Rastzähne an den Wangen und die Form der unteren Flanken der Rastzähne der Lagerstücke passende Gegenformen, sodass die Rastverzahnungen dort mit großen Aufstandsflächen und geringem Spiel oder bevorzugt spielfrei ineinander eingreifen. Außerdem können die Rastzähne der einen Rastverzahnung jeweils Kopfflächen und die Freiräume zwischen den Rastzähnen der anderen Rastverzahnung jeweils Rückflächen aufweisen, welche ebenfalls passende Gegenformen zueinander bilden und in der jeweiligen Raststellungen mit großflächigem Kontakt aneinander anliegen. Die Kopfflächen und die Rückflächen sind dabei vorzugsweise plan und parallel zur Frontebene der Rastverzahnungen bzw. zu den Wangen ausgeführt. Falls sowohl diese Flanken als auch die Kopf- und Rückflächen passende Gegenformen aufweisen, bilden die im Eingriff stehenden Zahnpaarungen in vorteilhafter Weise jeweils eine formschlüssige Positiv-Negativ-Einheit, wobei die Rastzähne selbstverständlich schmäler als die Freiräume zwischen den Rastzähnen ausgeführt sind, damit die Rastverzahnungen ineinandergesetzt werden können.

In einer besonders vorteilhaften Ausführungsform sind die oberen Flanken der Rastzähne an den Wangen als zur Wange hin abfallende Einlaufschrägen für die Rastzähne an den Lagerstücken ausgeführt. Dadurch können die Rastverzahnungen der Lagerstücke mit einer kombinierten Seit- und Abwärtsbewegung gleitend in die Rastverzahnungen der Wangen einlaufen. Besonders vorteilhaft ist es dabei, wenn die Lagerstücke bei genügend großer Auflast des Bauteils oder allein durch ihre Gewichtskraft selbsttätig gegen die Wangen in eine endgültige Raststellung streben können. Um die Reibung hierbei möglichst gering zu halten, weisen sowohl die oberen als auch die unteren Flanken bevorzugt plane Abschnitte auf, an denen diese bis zum Erreichen der endgültigen Raststellung parallel aneinandergleiten können. Für die Funktion der Einlaufschräge hat es sich als zweckmäßig erwiesen, wenn die oberen Flanken bzw. dessen plane Abschnitte in einem Winkel im Bereich zwischen 1° und 5° hinterschnitten bzw. geneigt sind. Zweckmäßigerweise ist die untere Flanke dann im selben Winkel geneigt. Anders als bei Getriebeverzahnungen üblich, können die Hinterschneidung der Flanken außerdem bereits an oder nahe an den, gegebenenfalls auch gerundeten, Kanten der Kopffläche der Rastzähne beginnen. Daher ist es möglich, dass die Flanken auf ihrer gesamten querschnittlichen Länge oder einem überwiegenden Teil davon hinterschnitten sind, was sich bei der zuvor beschriebenen Einlaufschräge als besonders vorteilhaft erweist. Sind die Rastzähne an den Wangen beidseitig auf diese Art hinterschnitten, können diese einen trapezförmigen Querschnitt aufweisen, bei dem sich die breiteste Stelle an oder nahe an der Kopffläche befindet. Querschnitte von symmetrischen Trapezen werden hierbei besonders bevorzugt. Die Rastzähne an den Lagerstücken sind zweckmäßigerweise ebenso geformt. Die Kanten bzw. die querschnittlichen Ecken trapezförmiger Rastzähne können selbstverständlich in geeigneter Weise abgerundet sein. Entsprechend sind in Falle der zuvor beschriebenen passenden Gegenformen die Kontaktflächen im Querschnitt als liegende Z- oder S-Formen erkennbar.

Obwohl es prinzipiell ausreichend ist, die Rastverzahnungen an den Lagerstücken jeweils nur mit einem Rastzahn auszuführen, wird es bevorzugt, wenn auch diese Rastverzahnungen aus mehreren Rastzähnen bestehen. Zweckmäßigerweise ist an den Wangen jedoch stets eine größere Anzahl von Rastzähnen vorgesehen, als an den Lagerstücken. Bei den Lagerstücken kann es zusätzlich von Vorteil sein, nicht nur die unteren, sondern auch die oberen Flanken der Rastzähne zu hinterschneiden. Dadurch können die Lagerstücke wechselweise in zwei um 180° verdrehte Lagen verwendet werden, was die Montage erleichtert. Besonders vorteilhaft ist es dabei, wenn die Flanken der Rastzähne an den Lagerstücken spiegelsymmetrisch hinterschnitten sind, insbesondere in der vorgenannten Trapezform.

Die erfindungsgemäße Vorrichtung eignet sich besonders, aber nicht nur, als Stützenschuh oder Gabelkopf zur Anwendung im Bauwesen oder in der Gestelltechnik. Entsprechend kann die Vorrichtung auf einem Fundament, dem Kopf einer Stütze oder anderen Montagestellen ortsfest angeordnet sein. Abschließend sei erwähnt, dass das in der Vorrichtung befestigte Bauteil nicht nur höhenverstellbar, sondern ebenso kippbar ist, da der Bolzen zudem als Gelenkachse wirken kann.

Nachfolgend wird ein Ausführungsbeispiel der Erfindung anhand von Zeichnungen näher erläutert. Es zeigt:
- **Fig. 1**: eine Perspektivansicht einer Anordnung mit einer erfindungsgemäßen Vorrichtung,
- **Fig. 2**: eine Seitenansicht der Anordnung gemäß **Fig. 1**,
- **Fig. 3**: eine Stirnansicht der Anordnung gemäß **Fig. 1**,
- **Fig. 4**: eine Stirnansicht der Anordnung gemäß **Fig. 1** vor der Endmontage,
- **Fig. 5**: eine Stirnansicht der Anordnung gemäß **Fig. 1** vor der Endmontage in einer anderen Raststellung,
- **Fig. 6**: ein Detail **D1** aus **Fig. 3** zu Rastverzahnungen,
- **Fig. 7**: ein Detail **D2** aus **Fig. 6** zu einem Rastzahn,
- **Fig. 8**: ein Detail **D3** aus **Fig. 6** zu Rastverzahnungen.

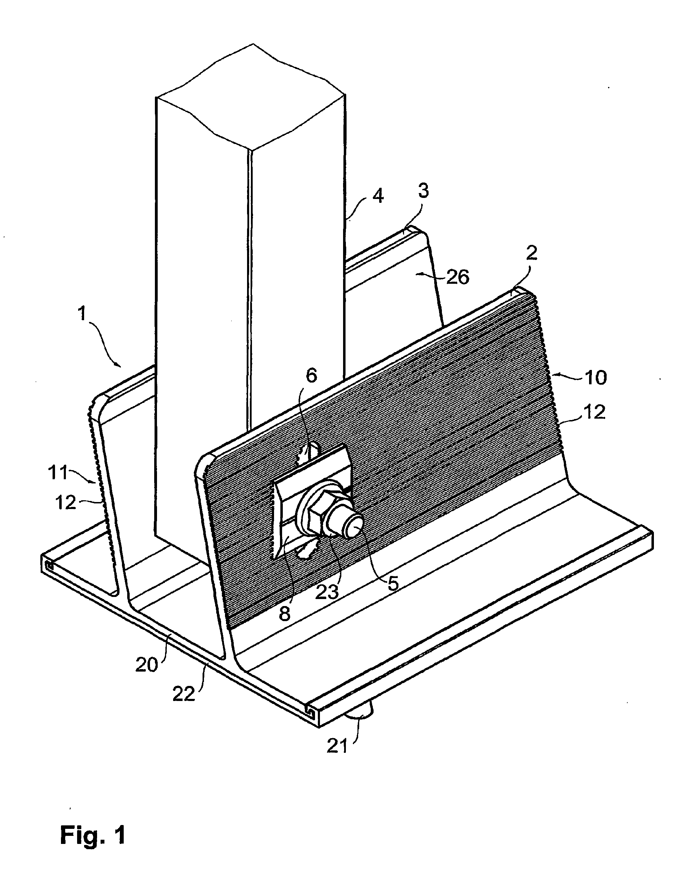

Die in **Fig. 1** bis **Fig. 3** in verschiedenen Ansichten dargestellte Anordnung umfasst eine erfindungsgemäße Vorrichtung mit einem stranggepressten Stützenschuh **1** mit zwei sich gegenüberstehenden, plattenförmigen Wangen **2** und **3**. Zwischen den beiden Wangen **2** und **3** ist nach dem Prinzip einer Gelenkgabel das Ende einer vertikalen Stütze **4** mittels der Schraube **5** einer Schraubverbindung befestigt. Die Schraube **5** ist hierbei in zwei fluchtenden Langlöchern **6** und **7** in den Wangen **2** und **3** höhenveränderlich geführt und außerdem in zwei stranggepressten Lagerstücken **8** und **9** gelagert, welche zwischen der Außenseite der Wange **2** und einer Mutter **23** auf der Schraube **5** bzw. zwischen der Außenseite der Wange **3** und dem Kopf **24** der Schraube **5** höhenverstellbar eingespannt sind. Die als Gelenkachse wirkende Schraube **5** durchdringt das Ende der Stütze **4**, sodass diese auch in anderen Neigungswinkeln bzw. Drehstellungen zwischen den Wangen **2** und **3** befestigt sein kann.

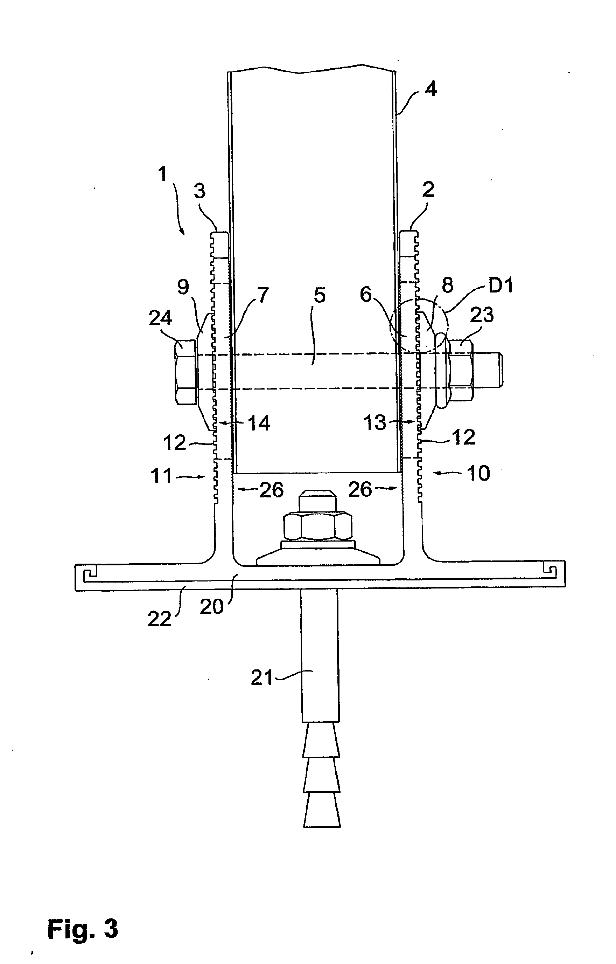

Der Stützenschuh **1** ist von einem extrudierten Profilstrang abgelängt und anschließend weiter bearbeitet worden. Er weist neben den Wangen **2** und **3** einen plattenförmigen Montagegrund **20** auf, an dem der Stützenschuh **1** auf einem nicht dargestellten horizontalen Fundament mittels eines Dübelankers **21** ortsfest angeordnet ist. Eine elastische Unterlage **22** dient hierbei zum Korrosionsschutz sowie zum Ausgleich geringer Unebeneinheiten auf dem Fundament. Wie insbesondere aus **Fig. 3** weiter zu erkennen ist, sind die Wangen **2** und **3** parallel beabstandet und senkrecht stehend auf dem Montagegrund **20** angeformt. Entsprechend bilden die Wangen **2** und **3** zusammen mit demjenigen Abschnitt des Montagegrunds **20**, der zwischen diesen angeordnet ist und an dem auch der Dübelanker **21** ansetzt, eine U-Profilform. Seitlich dieser U-Profilform ist der Montagegrund **20** zur Vergrößerung seiner Aufstandsfläche fortgesetzt. Die in den Wangen **2** und **3** enthaltenen Langlöcher **6** und **7** sind ebenfalls zum Montagegrund **20** senkrecht stehend und damit in der Anordnung vertikal angeordnet. Alternativ könnte die Schraube **5** auch in leicht schräg angeordneten Langlöchern höhenveränderlich geführt sein.

Die Lagerstücke **8** und **9** sind wie der Stützenschuh **1** in einem Strangpressverfahren hergestellt und anschließend weiter bearbeitet worden. Andere Herstellungsverfahren wie Fräsen oder Erodieren sind für die Lagerstücke **8** und **9** sowie für den Stützenkopf **1** ebenso denkbar. Damit die Lagerstücke **8** und **9** an den Wangen **2** und **3** nicht unbeabsichtigt abrutschen können, ist es vorgesehen, dass jede Wange **2** und **3** an ihrer Außenseite eine Rastverzahnung **10** bzw. **11** jeweils mit einer Vielzahl quer zu den Langlöchern **6** und **7** gerichteter Rastzähne **12** und jedes Lagerstück **8** bzw. **9** an seiner der Wange **2** bzw. **3** gegenüberliegenden Seite eine Rastverzahnung **13** bzw. **14** jeweils mit mehreren Rastzähnen **15** aufweist, wobei die Rastverzahnungen **13** bzw. **14** der Lagerstücke **8** und **9** in einer von mehreren Raststellungen unterschiedlicher Höhe in die Rastverzahnungen **10** bzw. **11** der Wangen **2** und **3** nach seitlichem Auf- bzw. Einsetzen eingreifen.

Die Rastverzahnungen **10** und **11** an den Wangen **2** und **3** sind mit dem Stützenschuh **1** mitextrudiert worden, wie auch die Rastverzahnung **13** und **14** mit den Lagerstücken **8** und **9**. Entsprechend sind die Rastzähne **12** bzw. **15** linear als Stränge ausgebildet, die parallel zum Montagegrund **20** und in der Anordnung damit waagerecht verlaufen. Wie bei Verzahnungen üblich, sind die Rastzähne **12** der Rastverzahnung **10** bzw. **11** alle identisch und gleich beabstandet. Dies trifft auch für die Rastzähne **15** der Rastverzahnung **13** bzw. **14** zu, wobei die Rastverzahnungen **13** und **14** an den Lagerstücken **8** und **9** im Durchdringungsbereich der Schraube **5** unterbrochen sind. Ferner sind die Verzahnungen **10** und **11** an den Wangen **2** und **3** oben und unten über die Langlöcher **6** und **7** fortgesetzt, sodass die gesamte Höhe der Langlöcher **6** und **7** zur Verstellung der Schraube **5** genutzt werden kann. Der Abstand der Rastzähne **12** an den Wangen **2** und **3** entspricht dabei einer Raststufe und beträgt in diesem Ausführungsbeispiel etwas mehr als einen Millimeter. Es sind rund 15 einander entsprechende Raststelllungen an beiden Wangen **2** und **3** möglich.

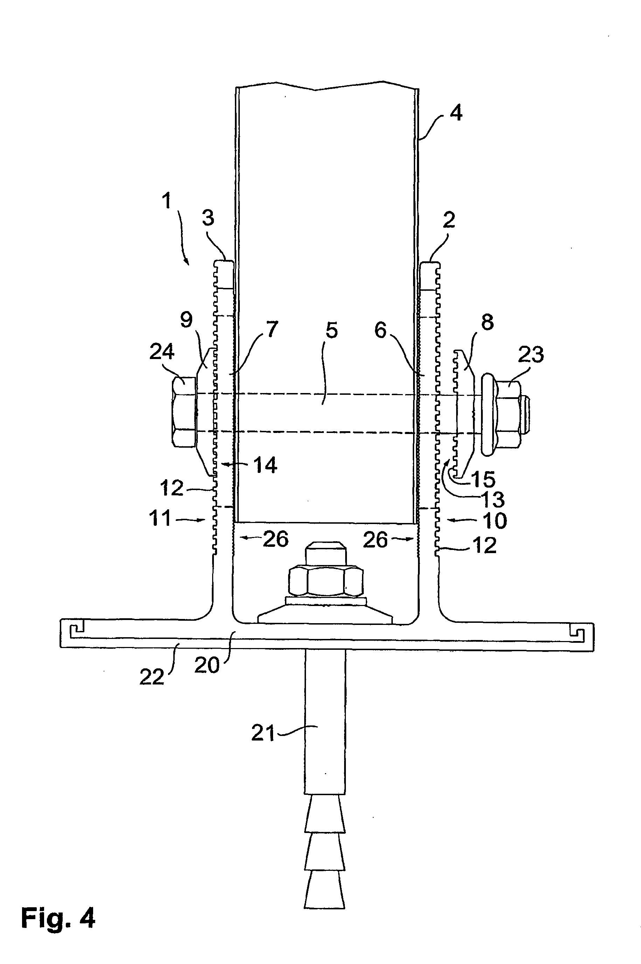

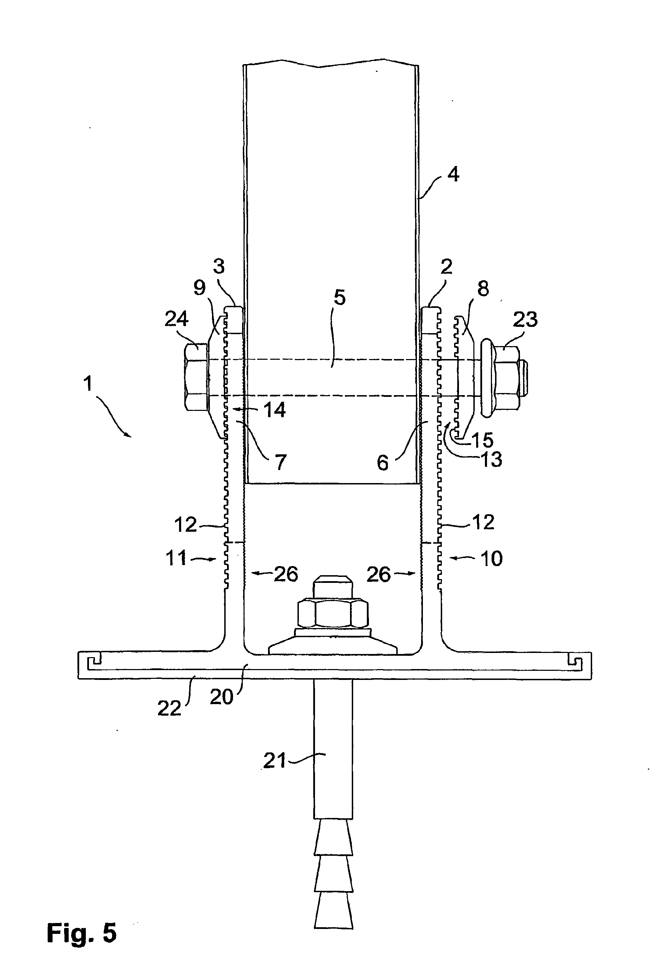

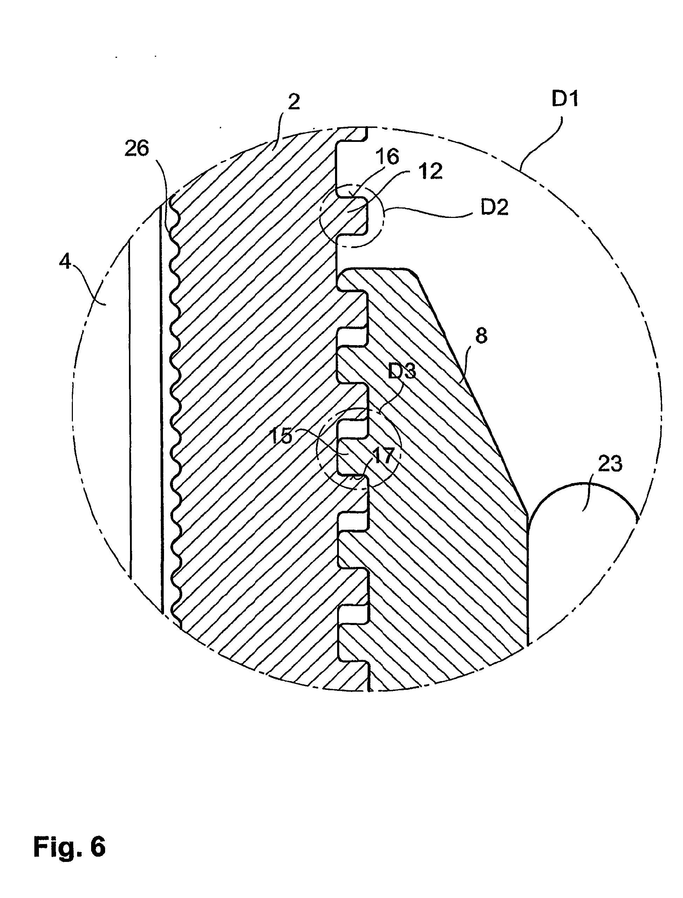

Zur weiteren Veranschaulichung der Höhenverstellbarkeit zeigen **Fig. 4** und **Fig. 5** die Anordnung während eines Montagevorgangs, wobei das Lagerstück **8** noch nicht mittels der Schraube **5** und der Mutter **23** gegen die Wange **2** gespannt ist. Die in **Fig. 4** gezeigte Position entspricht dabei einer mittleren Raststellung, bei welcher die Schraube **5** zwischen den oberen und unteren Begrenzungen der Langlöcher **6** und **7** etwa mittig angeordnet ist. In **Fig. 5** ist hingegen die Position in der höchsten Raststellung dargestellt. Zur Endmontage dieser beiden Anordnungen wird die Mutter **23** angezogen, sodass auch die Verzahnung **13** des Lagerstücks **8** in die Verzahnung **10** der Wange eingreift. Dieser gegenseitige Eingriff der Rastzähne ist im Detail D1 gemäß **Fig. 6** näher ersichtlich. Damit die Rastverzahnungen **13** bzw. **14** der Lagerstücke durch seitliches Auf- bzw. Einsetzen in die Rastverzahnungen **10** bzw. **11** an den Wangen **2** und **3** eingreifen können, sind die Rastzähne **12** und **15** schmäler ausgeführt als die Freiräume zwischen diesen.

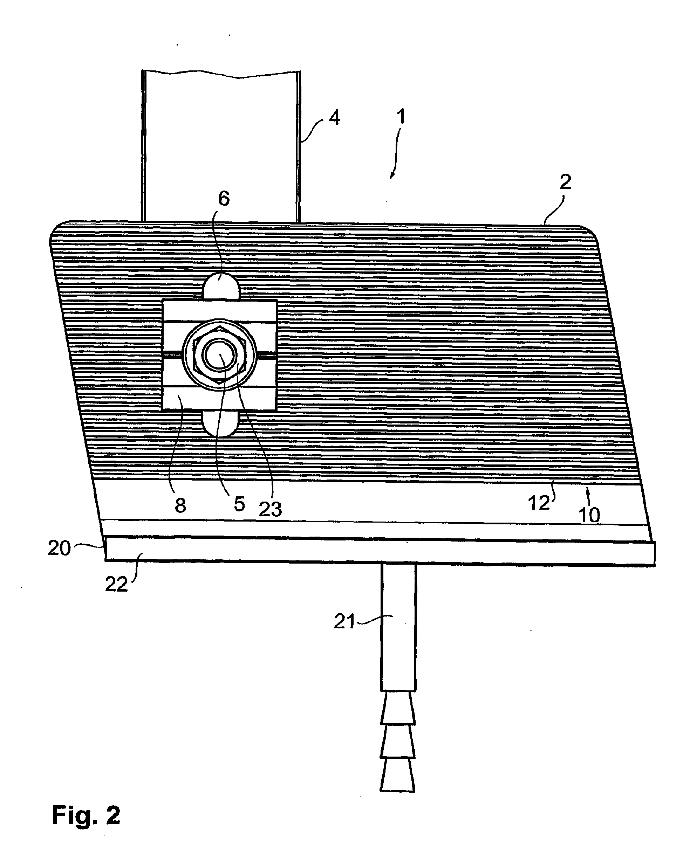

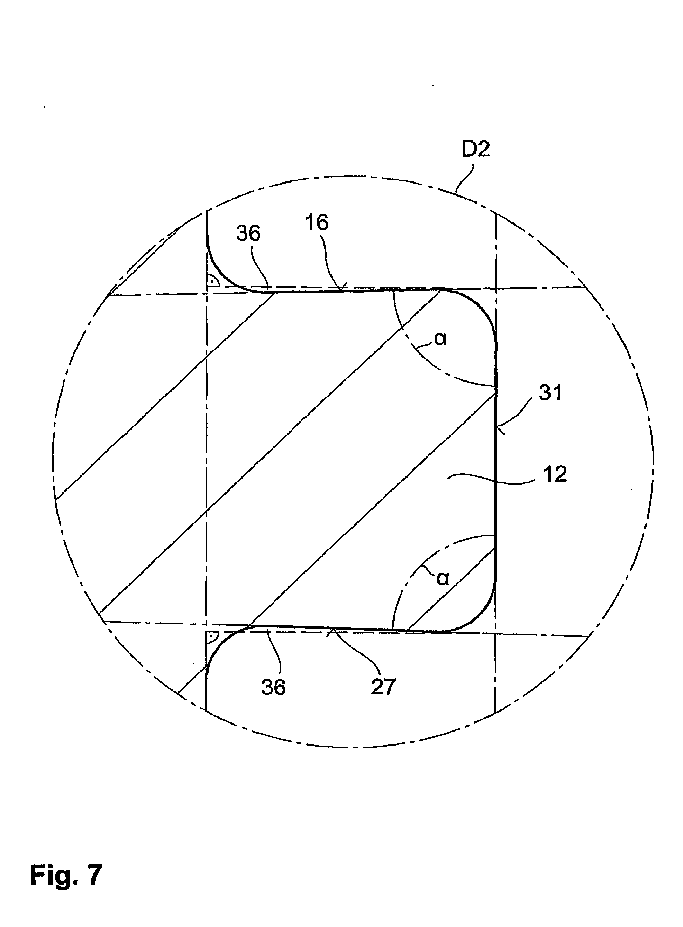

Eine wesentliche Neuerung der Erfindung besteht darin, die Lagerstücke **8** und **9** mittels ihrer Rastverzahnung **13** bzw. **14** in die Rastverzahnung **10** bzw. **12** der Wangen **2** und **3** eingehängt sind. Hierzu sind die Rastverzahnungen **10, 11, 13** und **14** in besonderer Weise korrespondierend geformt, was im Weiteren in den Details **D1** bis **D2** gemäß **Fig. 6** bis **Fig. 8** gezeigt wird. So ist einer der Rastzähne **12** an der Wange **2** im Detail **D2** gemäß **Fig. 7** näher dargestellt. Zusammen mit den Details **D1** und **D3** ist ersichtlich, dass die Rastzähne **15** an dem Lagerstück **8** identisch geformt und dort lediglich spiegelverkehrt angeordnet sind. Die Besonderheit der Rastverzahnungen **10, 11, 13** und **14** ist daran zu erkennen, dass die oberen Flanken **16** der Rastzähne **12** an den Wangen **2** und **3** wie auch die unteren Flanken **17** der Rastzähne **15** an den Lagerstücken **8** und **9** um einen geringen Betrag hinterschnitten ausgeführt sind. Das bedeutet, diese Flanken **16** und **17** sind in einer senkrechten Ansicht auf die Front der jeweiligen Rastverzahnung, wie in **Fig. 2**, zumindest teilweise vom Kopf bzw. der breitesten Stelle der Rastzähne **12** bzw. **15** verdeckt. Deshalb ist es möglich, dass die Lagerstücke **8** und **9** in der jeweiligen Raststellung an den Wangen **2** und **3** hängend angeordnet sind. Ergänzend sind auch die jeweils gegenüberliegenden Flanken **30** bzw. **34** in derselben Weise hinterschnitten.

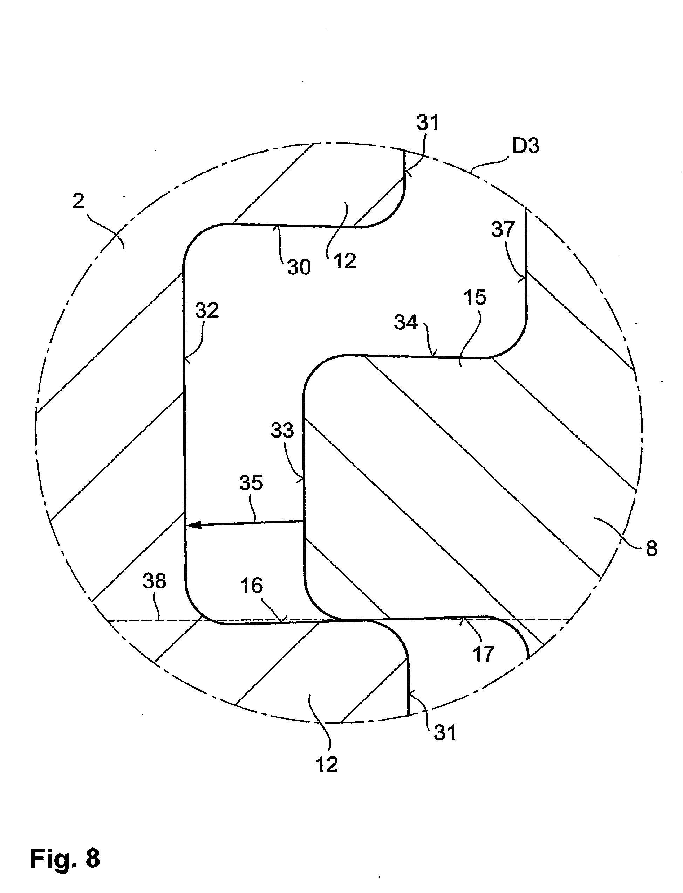

Wie insbesondere **Fig. 7** und **Fig. 8** im Detail zeigen, weisen die Rastzähne **12** und **15** einen trapezförmigen Querschnitt auf, der an den Ecken abgerundet ist. Die Form dieses symmetrischen Trapezes wird von den strichpunktierten Linien in **Fig. 7** eingeschlossen, wobei die Kopffläche **31** des Rastzahns **12** parallel in der Frontebene der Rastverzahnung **10** liegt und Flanken **16** und **27** mit einem Winkel von 1,5° hinterschnitten sind bzw. zur Kopffläche **31** einen Winkel a von 89,5° einnehmen. Durch die Hinterschneidungen **36** der unteren Flanken **17** und der oberen Flanken **16** werden zum jeweiligen Zahnkopf hin entsprechend positiv geformte Vorsprünge gebildet, die sich beim Einhängen hintergreifen. Obwohl die Hinterschneidungen **36** und die Vorsprünge der jeweiligen Flanke **16** und **17** fließend ineinander übergehen und sehr flach ausgeführt sind, wirken die Vorsprünge der unteren Flanken **17** im weiten Sinne als Haken, die in die Hinterschneidung **36** der oberen Flanken **16** eingreifen, sodass eine Hakenverbindung gebildet wird, die ohne weiteres Zutun allein durch die Gewichtskraft der Lagerstücke **8** und **9** hält. Da die Flanken **16** und **17** der Rastzähne **15** an den Lagerstücke **8** und **9** unten und oben symmetrisch hinterschnitten sind, können diese wechselweise in zwei Lagen um 180° verdreht verwendet werden.

In einer Stellung kurz vor dem Erreichen der endgültigen Raststellung, wie sie im Detail **D3** gemäß **Fig. 8** dargestellt ist, stehen auf der Seite der Rastzähne **12** die obere Flanke **16**, die Kopffläche **31** und eine den Zahnzwischenraum begrenzende Rückfläche **32** den entsprechenden Flächen auf der Seite der Rastzähne **15** jeweils gegenüber, nämlich der unteren Flanke **17**, einer den Zahnzwischenraum begrenzenden der Rückfläche **37** und der Kopffläche **33.** Alle diese Flächen sind als passende Gegenformen ausgeführt, wodurch eine spielfrei Verbindung mit entsprechend großer Aufstands- und Anlagefläche erzielt wird. Die Rastverzahnungen **10** und **13** bzw. **11** und **14** bilden daher je Zahnpaarung eine formschlüssige Positiv-Negativ-Einheit, bei der lediglich die Freiräume zwischen den Rastzähnen **12** und 15 breiter sind als Rastzähnen **15** und **12** selbst.

Wie in **Fig. 8** weiter zu erkennen ist, wirkt die obere Flanke **16** des Rastzahns **12** als zur Wange **2** hin abfallende Einlaufschräge für den Rastzahn **15.** Die Einlaufschräge fällt dabei mit dem oberen Schenkel des zuvor beschriebenen Trapezes zusammen und ist folglich mit dem Winkel von 1,5° gegenüber einer Waagerechten **38** geneigt. Dadurch kann die Rastverzahnung **13** des Lagerstücks **8** mit einer durch den Wegpfeil **35** veranschaulichten kombinierten Seit- und Abwärtsbewegung auf der Flanke **16** in die Rastverzahnung **10** der Wange **2** gleiten. Da die untere Flanke **17** am Rastzahn **15** eine passende Gegenform aufweist, also ebenfalls plan und im selben Winkel geneigt ist, besteht zwischen den Flanken **16** und **17** nur eine geringe Reibung, sodass die Lagerstücke **8** und **9** allein durch ihre Gewichtskraft oder zumindest bei genügend großer Auflast durch die Stütze 4 von selbst gegen die Wangen **2** und **3** in die endgültige Raststellung streben bzw. die Bewegung entlang des Wegpfeils **35** ausführen. Die als Einlaufschräge wirkende Flanke **16** führt daher zu einer Art von Selbstspannfunktion für die Lagerstücke **8** und **9**, wodurch selbst bei einer Lockerung der Schraubverbindung die Lagerstücke **8** und **9** weiterhin gegen die Wangen **2** und **3** gepresst werden.

Schließlich ist an den Innenseiten der Wangen **2** und **3** je eine weitere Verzahnung **26** vorgesehen, die wiederum mit dem Stützenschuh **1** mitextrudiert ist. Eine dieser Verzahnungen **26** und deren Wellenform ist in **Fig. 6** näher zu erkennen. Mit den Verzahnungen **26** kann die Drehreibung zwischen der Stütze **4** und den Wangen **2** und **3** erhöht werden, falls das Spannen der Schraube **5** und der Mutter **4** in einem Maße erfolgt, bei dem die Innenseiten der Wangen **2** und **3** gegen die benachbarten Außenseiten der Stütze **4** gepresst werden. Der in **Fig. 6** ersichtliche Spalt zwischen der Verzahnung **26** und der Außenseite der Stütze **4** verschwindet hierbei. Auf diese Weise kann der Stützenschuh **1** die Stütze **4** zusätzlich rotatorisch einspannen bzw. auch Drehmomente aufnehmen. Die Drehreibung zwischen Stütze **4** und dem Stützenschuh **1** lässt sich weiter erhöhen, indem an der Stütze **4** ähnliche Verzahnungen vorgesehen sind, welche quer zu den Verzahnungen **26** verlaufen oder diese schneiden. Wird die Spannung der Schraubverbindung dann derart erhöht, dass sich die Verzahnungen unter plastischer Verformung gegenseitig ineinanderdrücken, wird ein drehstarrer Verbund erzielt. Eine solche Einspannung der Stütze kann alternativ auch sehr gering sein oder ganz unterbleiben, wodurch die Vorrichtung wie ein Kipplager wirkt, bei welchem die Stütze **4** an der Schraube **5** drehfrei gelagert ist. Die Höhenverstellbarkeit der Schraube **5** mittels der Lagerstücke **8** und **9** bleibt davon unberührt, da die vorbeschriebene Hakenverbindung zwischen den Rastverzahnungen **10** und **13** bzw. **11** und **14** ohne weiteres Zutun bzw. ohne seitliches Spannen hält. Ein Lösen der Hakenverbindung ist ohne gleichzeitiges Anheben der Stütze **4** um den Betrag der Hinterschneidung **36** nicht möglich. Anstelle einer Schraubverbindung kann im Übrigen genauso ein Bolzen vorgesehen sein, an dem die Lagerstücke **8** und **9** lediglich axial gesichert sein können, beispielsweise mit Splinten.

## Patentansprüche

1. Vorrichtung zum Befestigen von Bauteilen, insbesondere von Balken, mit einem fest anordenbaren Strangpressteil (**1**) mit zwei sich gegenüberstehenden Wangen (**2, 3**), zwischen denen ein Bauteil (**4**) mittels eines Bolzens (**5**) befestigbar ist, wobei der Bolzen (**5**) in zwei Schlitzen (**6**, **7**) in den Wangen (**2**, **3**) höhenveränderlich geführt ist und in zwei stranggepressten Lagerstücken (**8**, **9**) lagert, welche an den Außenseiten der Wangen (**2**, **3**) angeordnet sind, wobei jede Wange (**2**, **3**) an ihrer Außenseite eine Rastverzahnung (**10**, **11**) mit einer Vielzahl quer zu den Schlitzen (**6**, **7**) gerichteter Rastzähne (**12**) und jedes Lagerstück (**8**, **9**) an seiner der Wange (**2**, **3**) gegenüberliegenden Seite eine Rastverzahnung (**13**, **14**) mit mindestens einem Rastzahn **(15)** aufweist, wobei die Rastverzahnungen (**13**, **14**) der Lagerstücke (**8**, **9**) In einer von mehreren Raststellungen unterschiedlicher Höhe in die Rastverzahnungen (**10**, **11**) der Wangen (**2**, **3**) eingreifen, **dadurch gekennzeichnet, dass** die Lagerstücke (**8**, **9**) mittels ihrer Rastverzahnung (**13**, **14**) in die Rastverzahnung (**10**, **11**) der Wangen (**2**, **3**) eingehängt sind, wozu die im Montagezustand oberen Flanken (**16**) der Rastzähne (**12**) der Rastverzahnungen (**10**, **11**) der Wangen (**2**, **3**) und die im Montagezustand unteren Flanken (**17**) der Rastzähne (**16**) der Rastverzahnungen (**13**, **14**) der Lagerstücke (**8**, **9**) hinterschnitten ausgeführt sind.

2. Vorrichtung nach Anspruch 1, **dadurch gekennzeichnet, dass** die Lagerstücke (**8**, **9**) und der Bolzen (**5**) gegeneinander axial gesichert sind.

3. Vorrichtung nach Anspruch 1 oder 2, **dadurch gekennzeichnet, dass** die Lagerstücke (**8**, **9**) mit am Bolzen (**5**) vorgesehenen Spannmitteln (**23**, **24**) gegen die Wangen (**2**, **3**) gespannt sind.

4. Vorrichtung nach Anspruch 1, **dadurch gekennzeichnet, dass** das Strangpressteil (**1**) einen mitextrudierten Montagegrund (**20**) aufweist, wobei die Schlitze (**6**, **7**) senkrecht zu dem Montagegrund (**20**) vorgesehen sind und/oder die Wangen (**2**, **3**) mit dem Montagegrund (**20**) oder einem Teil davon eine U Profilform bilden.

5. Vorrichtung nach Anspruch 1, **dadurch gekennzeichnet, dass** die Form der oberen Flanken (**16**) der Rastzähne (**12**) an den Wangen (**2**, **3**) und die Form der unteren Flanken (**17**) der Rastzähne (**15**) an den Lagerstücke **(8**, **9)** passende Gegenformen sind.

6. Vorrichtung nach Anspruch 1 oder 5, **dadurch gekennzeichnet, dass** die Rastzähne (**12, 15**) der einen Rastverzahnung (**10, 11, 13, 14**) plane Kopfflächen (**31, 33**) und die Freiräume zwischen den Rastzähnen (**12**, **15**) der anderen Rastverzahnung (**13**, **14**, **10**, **11**) plane Rückflächen (**32**, **37**) aufweisen, die in einer Raststellung passend aneinanderliegen.

7. Vorrichtung nach Anspruch 1 oder 5, **dadurch gekennzeichnet, dass** die oberen Flanken (**16**) der Rastzähne (**12**) an den Wangen (**2**, **3**) als zur Wange hin abfallende Einlaufschrägen für die Rastzähne (**15**) an den Lagerstücken (**8**, **9**) ausgeführt sind.

8. Vorrichtung nach einem der vorhergehenden Ansprüche, **dadurch gekennzeichnet, dass** die oberen Flanken (**16**) der Rastzähne (**12**) an den Wangen (**2**, **3**) und/oder die unteren Flanken (**17**) der Rastzähne (**15**) an den Lagerstücken (**8**, **9**) mit einem Winkel im Bereich zwischen 1° und 5° hinterschnitten ausgeführt sind.

9. Vorrichtung nach einem der vorhergehenden Ansprüche, **dadurch gekennzeichnet, dass** die Rastzähne (**12**) an den Wangen (**2**, **3**) und/oder die Rastzähne (**15**) an den Lagerstücken (**8**, **9**) einen trapezförmigen Querschnitt aufweisen.

10. Vorrichtung nach dem vorhergehenden Anspruch, **dadurch gekennzeichnet, dass** die Kanten von Rastzähnen (**12**, **15**) mit trapezförmigem Querschnitt abgerundet sind.

11. Vorrichtung nach einem der vorhergehenden Ansprüche, **dadurch gekennzeichnet, dass** die oberen Flanken (**34**) der Rastzähne (**15**) an den Lagerstücken (**8**, **9**) ebenfalls hinterschnitten sind.

12. Vorrichtung nach dem vorhergehenden Anspruch, **dadurch gekennzeichnet, dass** die unteren und oberen Flanken (**17**, **34**) der Rastzähne (**15**) an den Lagerstücken (**8**, **9**) spiegelsymmetrisch hinterschnitten ausgeführt sind.

13. Stützenschuh oder Gabelkopf umfassend eine Vorrichtung nach Anspruch 1.

14. Anordnung mit einer Vorrichtung nach Anspruch 1, **dadurch gekennzeichnet, dass** das Strangpressteil (**1**) an einer Montagestelle fest angeordnet ist und zwischen den Wangen (**2**, **3**) ein von dem Bolzen (**5**) durchdrungenes Bauteil (**4**) befestigt ist.

15. Anordnung nach dem vorhergehenden Anspruch, **dadurch gekennzeichnet, dass** das Bauteil (**4**) zur Übertragung von Momenten zwischen den Wangen **(2, 3)** eingespannt ist.

## Claims

1. Device to attach components - in particular beams - with an extruded part (**1**) that may be arranged in a fixed manner, said extrusion part (**1**) having two opposing flange members (**2, 3**) between which a component (**4**) may be attached by means of a bolt (**5**), wherein the bolt (**5**) is guided in two slots (**6**, **7**) in the flange members (**2**, **3**) so as to be height-adjustable and is supported in two extruded bearing elements (**8**, **9**) which are arranged on the outer sides of the flange members (**2**, **3**), wherein each flange member (**2**, **3**) has on its outer side a detent toothing (**10**, **11**) with a plurality of detent teeth (**12**) directed transversely to the slots (**6**, **7**), and each bearing element (**8**, **9**) has on its side opposite the flange member (**2**, **3**) a detent toothing (**13**, **14**) with at least one detent tooth (**15**), wherein the detent toothings (**13**, **14**) of the bearing elements (**8**, **9**) engage in the detent toothings (**10**, **11**) of the flange members (**2**, **3**) in one of multiple indexing positions of different levels, **characterized in that** the bearing elements (**8**, **9**) are suspended into the detent toothing (**10**, **11**) of the flange members (**2**, **3**) by means of their detent toothings (**13, 14**), for which - in an assembled state - the upper flanks (**16**) of the detent teeth (**12**) of the detent toothings (**10**, **11**) of the flange members (**2**, **3**) and - in an assembled state - the lower flanks (**17**) of the detent teeth **(15)** of the detent toothings (**13**, **14**) of the bearing elements (**8**, **9**) are designed with undercuts.

2. Device according to claim 1, **characterized in that** the bearing elements (**8**, **9**) and the bolt (**5**) are axially secured against each other.

3. Device according to claim 1 or 2, **characterized in that** the bearing elements (**8, 9**) are tightened against the flange members (**2**, **3**) with tensioning means (**23**, **24**) provided on the bolt (**5**).

4. Device according to claim 1, **characterized in that** the extrusion part (**1**) comprises a co-extruded mounting base (**20**), wherein the slots (**6**, **7**) are disposed perpendicularly to the mounting base (**20**), and/or the flange members (**2**, **3**) form a U-profile shape together with the mounting base (**20**) or a portion thereof.

5. Device according to claim 1, **characterized in that** the shape of the upper flanks (**16**) of the detent teeth (**12**) on the flange members (**2**, **3**) and the shape of the lower flanks (**17**) of the detent teeth (**15**) on the bearing elements (**8**, **9**) are fitting counter-shapes.

6. Device according to claim 1 or 5, **characterized in that** the detent teeth (**12**, **15**) of the one detent toothing (**10**, **11**, **13**, **14**) comprise planar front surfaces (**31**, **33**), and the free spaces between the detent teeth (**12, 15**) of the other detent toothing (**13, 14, 10, 11)** comprise planar back surfaces (**32**, **37**), wherein, in a indexing position, the planar front surfaces (**31**, **33**) and the planar back surfaces (**32**, **37**) fittingly abut each other.

7. Device according to claim 1 or 5, **characterized in that** the upper flanks (**16**) of the detent teeth (**12**) on the flange members (**2**, **3**) are designed as lead-in slants, declining toward the flange member, for the detent teeth (**15**) on the bearing elements (**8, 9**).

8. Device according to one of the preceding claims, **characterized in that** the upper flanks (**16**) of the detent teeth (**12**) on the flange members (**2**, **3**) and/or the lower flanks (**17**) of the detent teeth (**15**) on the bearing elements (**8**, **9**) are designed with undercuts having an angle in a range between 1° and 5°.

9. Device according to one of the preceding claims, **characterized in that** the detent teeth (**12**) on the flange members (**2**, **3**) and/or the detent teeth (**15**) on the bearing elements (**8**, **9**) have a trapezoidal cross section.

10. Device according to the preceding claim, **characterized in that** the flanks of detent teeth (**12**, **15**) with trapezoidal cross section are rounded.

11. Device according to one of the preceding claims, **characterized in that** the upper flanks (**34**) of the detent teeth (**15**) on the bearing elements (**8**, **9**) are undercuts as well.

12. Device according to the preceding claim, **characterized in that** the lower and upper flanks (**17**, **34**) of the detent teeth (**15**) on the bearing elements (**8**, **9**) are designed with mirror-symmetrical undercuts.

13. Supporting shoe or yoke mount comprising a device according to claim 1.

14. Arrangement with a device according to claim 1, **characterized in that** the extrusion part (**1**) is fixedly arranged at a mounting site, and a component (**4**) penetrated by the bolt (**5**) is attached between the flange members (**2**, **3**).

15. Arrangement according to the preceding claim, **characterized in that** the component (**4**) is clamped between the flange members (**2**, **3**) for transmission of moments.

## Revendications

1. Dispositif de fixation de composants, en particulier de poutres, avec une pièce extrudée (**1**) qui peut être agencée fixe avec deux rebords (**2**, **3**) se faisant face, entre lesquels un composant (**4**) peut être fixé par le biais d'un boulon (**5**), dans lequel le boulon (**5**) est inséré, à une hauteur variable, dans deux fentes (**6**, **7**) dans les rebords (**2**, **3**) et entreposé dans deux éléments de réception extrudés (**8**, **9**), agencés sur les côtés extérieurs des rebords (**2**, **3**), dans lequel chaque rebord (**2**, **3**) présente, sur son côté extérieur, une denture d'enclenchement (**10, 11**) avec une pluralité de dents d'enclenchement (**12**) orientées transversalement par rapport aux fentes (**6**, **7**) et chaque élément de réception (**8**, **9**) présente, sur son côté opposé au rebord (**2**, **3**) une denture d'enclenchement (**13**, **14**) avec au moins une dent d'enclenchement (**15**), dans lequel les dentures d'enclenchement (**13**, **14**) des éléments de réception (**8**, **9**) se mettent en prise dans une de plusieurs positions d'enclenchement, à différentes hauteurs, dans les dentures d'enclenchement (**10**, **11**) des rebords (**2**, **3**), **caractérisé en ce que** les éléments de réception (**8**, **9**) sont accrochés par le biais de leur denture d'enclenchement (**13**, **14**) dans la denture d'enclenchement (**10**, **11**) des rebords (**2**, **3**), ce pour quoi les flancs (**16**) supérieurs dans l'état monté des dents d'enclenchement (**12**) des dentures d'enclenchement (**10**, **11**) des rebords (**2**, **3**) et les flancs (**17**) inférieurs dans l'état monté des dents d'enclenchement (**15**) des dentures d'enclenchement (**13**, **14**) des éléments de réception (**8**, **9**) sont réalisés avec des contre-dépouilles.

2. Dispositif selon la revendication 1, **caractérisé en ce que** les éléments de réception (**8**, **9**) et le boulon (**5**) sont serrés à l'opposé l'un de l'autre au plan axial.

3. Dispositif selon la revendication 1 ou 2, **caractérisé en ce que** les éléments de réception (**8**, **9**) sont mis sous tension par le biais de moyens de mise sous tension (**23**, **24**) prévus sur le boulon (**5**) contre les rebords (**2**, **3**).

4. Dispositif selon la revendication 1, **caractérisé en ce que** la pièce extrudée (**1**) présente un plan de montage (**20**) extrudé conjointement, dans lequel les fentes (**6**, **7**) sont prévues perpendiculaires au plan de montage (**20**) et/ou les rebords (**2**, **3**) forment une forme profilée en U avec le plan de montage (**20**) ou une partie de celui-ci.

5. Dispositif selon la revendication 1, **caractérisé en ce que** la forme des flancs supérieurs (**16**) des dents d'enclenchement (**12**) sur les rebords (**2**, **3**) et la forme des flancs inférieurs (**17**) des dents d'enclenchement (**15**) sur les éléments de réception (**8**, **9**) sont des contre-formes correspondantes.

6. Dispositif selon la revendication 1 ou 5, **caractérisé en ce que** les dents d'enclenchement (**12**, **15**) de la denture d'enclenchement (**10**, **11**, **13**, **14**) présentent des surfaces de tête planes (**31**, **33**) et les espaces libres entre les dents d'enclenchement (**12**, **15**) de l'autre denture d'enclenchement (**13**, **14**, **10**, **11**) présentent des surfaces arrière planes (**32**, **37**), qui sont disposées adjacentes et de manière correspondante dans une position d'enclenchement.

7. Dispositif selon la revendication 1 ou 5, **caractérisé en ce que** les flancs supérieurs (**16**) des dents d'enclenchement (**12**) sur les rebords (**2**, **3**) sont réalisés comme des biseaux d'entrée, en pente vers le rebord, pour les dents d'enclenchement (**15**) sur les éléments de réception (**8**, **9**).

8. Dispositif selon l'une des revendications précédentes, **caractérisé en ce que** les flancs supérieurs (**16**) des dents d'enclenchement (**12**) sur les rebords (**2**, **3**) et/ou les flancs inférieurs (**17**) des dents d'enclenchement (**15**) sur les éléments de réception (**8**, **9**) sont dotés de contre-dépouilles avec un angle situé dans la plage comprise entre 1° et 5°.

9. Dispositif selon l'une des revendications précédentes, **caractérisé en ce que** les dents d'enclenchement (**12**) sur les rebords (**2**, **3**) et/ou les dents d'enclenchement (**15**) sur les éléments de réception (**8**, **9**) présentent une section transversale trapézoïdale.

10. Dispositif selon la revendication précédente, **caractérisé en ce que** les arêtes des dents d'enclenchement (**12**, **15**) sont arrondies avec une section transversale trapézoïdale.

11. Dispositif selon l'une des revendications précédentes, **caractérisé en ce que** les flancs supérieurs (**34**) des dents d'enclenchement (**15**) sur les éléments de réception (**8**, **9**) sont également dotés de contre-dépouilles.

12. Dispositif selon la revendication précédente, **caractérisé en ce que** les flancs supérieurs et inférieurs (**17**, **34)** des dents d'enclenchement (**15**) sur les éléments de réception (**8**, **9**) sont dotés de contre-dépouilles symétriquement opposées.

13. Sabot de colonne ou tête de fourche comprenant un dispositif selon la revendication 1.

14. Agencement contenant un dispositif selon la revendication 1, **caractérisé en ce que** la pièce extrudée (**1**) est agencée fixe sur une position de montage et **en ce qu'**un composant (**4**) traversé par le boulon (**5**) est fixé entre les rebords (**2**, **3**).

15. Agencement selon la revendication précédente, **caractérisé en ce que** le composant (**4**) est mis sous tension pour la transmission de couples entre les rebords (**2**, **3**).
